# EUROPÄISCHE PATENTSCHRIFT

(11) **EP 0 411 312 B1**
(45) Veröffentlichungstag und Bekanntmachung des Hinweises auf die Patenterteilung: **13.04.1994**
(21) Anmeldenummer: 90112171.5
(22) Anmeldetag: 27.06.1990
(51) Int. Cl.: B62D 1/18

(54) **Vorrichtung zum Verriegeln einer verstellbaren Sicherheitslenksäule für Kraftfahrzeuge**
Device for locking an adjustable safety steering column of a motor vehicle
Dispositif pour verrouiller la colonne de direction ajustable d'une voiture

(30) Priorität: 03.08.1989 DE 3925706
(43) Veröffentlichungstag der Anmeldung: 06.02.1991
(73) Patentinhaber: Dr.Ing.h.c. F. Porsche Aktiengesellschaft, 70435 Stuttgart (DE)
(72) Erfinder: Schaible, Walter, Dipl.-Ing., D-7251 Hemmingen (DE); Wierschem, Franz-Rudolf, Dipl.-Ing., D-7251 Weissach (DE)

(56) Entgegenhaltungen:
- EP-A- 0 335 397
- AT-B- 38 806
- DE-A- 3 308 788
- DE-C- 902 586
- FR-A- 2 579 159
- GB-A- 1 523 638
- US-A- 4 244 237

## Beschreibung

Die Erfindung bezieht sich auf eine Vorrichtung nach dem Oberbegriff des Anspruchs 1.

Aus der DE-PS 902 586 ist eine derartige Verriegelung für eine schwenkbare Lenksäule von Kraftfahrzeugen bekannt, welche eine Klemmeinrichtung mit einer Zugstange umfasst, die die Lenksäule zwischen aufbaufesten Konsolen hält. Diese Einrichtung bedingt zum Festsetzen über einen Hebel einen relativ großen Hebelschwenkweg. Auch ist die Einrichtung aufgrund der Reibscheiben und der mehrfachen Konsolen aufwendig in der Bauart und zu montieren. Desweiteren ist aus der GB-PS 15 23 638 eine gattungsgemäße Klemmeinrichtung für verschwenkbare Lenksäulen bekannt, die zur Erzielung der Klemmung ein Exzenterelement an einem Hebel aufweisen, der zum Verriegeln nach außen verschwenkt wird und somit relativ viel Freiraum zur Betätigung beansprucht. Ferner ist aus der FR-A-2 579 159 eine auch dem Oberbegriff des Anspruchs 1 entsprechende Verriegelungsvorrichtung für eine verstellbare Lenksäule bekannt, die eine Zugstange umfasst, welche mit einem Stellhebel über ein Exzenterelement verbunden ist. Dieses stützt sich an einem Beschlag ab, der auf Hülsen wirkt, in denen die Lenksäule gehalten ist.

Aufgabe der Erfindung ist es, eine Vorrichtung zum Verriegeln einer verstellbaren Sicherheitslenksäule zu schaffen, die bei kleinen Verstellwegen eine optimale Klemmwirkung bei einer einfach aufgebauten kompakten Bauweise ermöglicht. Ferner soll die Vorrichtung bei einem Crash die bestehende Verriegelung der Lenksäule am Aufbau aufheben können.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Vorrichtung aus wenigen kostengünstig herzustellenden Bauteilen besteht, die teilweise vormontiert am Fahrzeugaufbau zu befestigen sind.

Zur Erzielung einer Verriegelungsstellung bzw. einer Losstellung der Lenksäule im Fahrzeug dient ein Exzenterelement an einer Betätigungsstange mit einer Handhabe, wobei die Stange achsparallel zur Lenksäule angeordnet ist und durch ein Verschwenken um ca. 90° beide Stellungen bedient. Dadurch wird eine raumgünstige Anordnung der Stange zur Lenksäule sowie eine günstige Lage zum Bedienen bei geringem Raumbedarf erzielt.

Die Endstellungen werden durch Anschläge einer Feder fixiert, so daß die Verriegelungsstellung sowie die Losstellung immer eingehalten wird, was zur Sicherheit der Einstellung sowie der Klemmstellung beiträgt. Die Rückstellung der Stange der Klemmeinrichtung von der Losstellung in die Verriegelungsstellung wird durch die Anschlagfeder unterstützt.

Über eine Sicherheitseinrichtung am Ende des Druckbolzens wird eine Entriegelung der Lenksäule z.B. bei einem Crash bewirkt, derart, daß die Klemmwirkung bei einer Verschiebung des Lenkstrangs in Fahrtrichtung, z.B. bei einem Crash durch einen Aufprall des Insassen auf das mit einem Airbag ausgerüsteten Lenkrades aufgehoben wird, um damit ein möglichst querkraftfreies Verschieben der Lenkanlage zu ermöglichen.

Durch die Anordnung eines Kugellagers auf der Exzenterhülse wird ein leichtgängiges Lösen der Klemmung und ebenso ein leichtgängiges Festsetzen gewährleistet, da das Kugellager auf der Exzenterhülse abrollen kann.

Die Größe der Exzentrität definiert die Klemmwirkung, so daß bei maximaler Klemmwirkung die größte Exzentrität des Hülsenteils der benachbarten Konsole zugerichtet ist.

Damit eine Haltung der Lenksäule beim Verschwenken möglich wird, ist ein federbelasteter Raststift vorgesehen, der die Lenksäule beim Verschwenken in die vom Fahrer gewünschte Position zum Festsetzen hält.

Ein Ausführungsbeispiel der Erfindung ist in der Zeichnung dargestellt und wird im folgenden näher beschrieben.

Es zeigen:
- Fig. 1: eine Seitenansicht einer verstellbaren Sicherheitslenksäule mit Verriegelungseinrichtung,
- Fig. 2: eine Draufsicht zu Fig. 1,
- Fig. 3: einen Schnitt nach der Linie III-III der Fig. 1,
- Fig. 4: einen Schnitt nach der Linie IV-IV der Fig. 1,
- Fig. 5: einen Schnitt nach der Linie V-V der Fig. 4,
Die Verriegelungsvorrichtung 1 für eine Lenksäule 2 umfaßt im wesentlichen eine aus zwei Konsolen 3 und 4 bestehende Halterung, die am Fahrzeugaufbau 5 über Schrauben 6 festgesetzt ist. Zwischen den beiden Konsolen 3 und 4 ist die Lenksäule 2 mit ihrem Lenkschutzrohr 7 angeordnet, das in einer Quertraverse 8 befestigt ist, die ein Lenkradschloß und Anzeigeinstrumente trägt. Diese Quertraverse 8 weist im Bereich der aufbaufesten Konsolen 3 und 4 parallel und vertikal ausgerichtete Schenkel 9 und 10 auf, die zwischen den Konsolen 3 und 4 über eine Klemmeinrichtung 11 eingespannt gehalten und zum Fahrzeugaufbau 5 festgesetzt sind.

Die Konsolen 3 und 4 weisen etwa in einer vertikalen Ebene Y-Y ausgerichtete Führungschlitze 12 und 13 auf, die eine Führung für eine Zugstange 14 bilden, welche in den Schenkeln 9 und 10 der Quertraverse 8 gehalten sind und ein Verschwenken der Lenksäule 2 in die Pfeilrichtungen 15 und 16 um einen Gelenkpunkt 17 bzw. um den in der Aufbauwand 18 gehaltenen Topf 19 der Lenksäule 2 ermöglicht.

Die Klemmeinrichtung 11 umfaßt ein zur Lenksäule 2 achsparallel angeordnetes Exzenterelement 20, das achsial auf einer Stange 21 eines Betätigungshebels befestigt ist. Diese ist mit einem freien Ende 22 in einer endseitigen Aufnahme 23 der Druckstange 14 drehbar gelagert, die sich quer zur Lenksäule 2 durch die Schlitze 12 und 13 erstreckt und die mit ihrem dem der Aufnahme 23 abgekehrten Ende über eine Sicherheitseinrichtung 45 und eine Einstelleinrichtung 46 an der Konsole 3 gehalten wird.

Das Exzenterelement 20 umfaßt eine mit der Stange 21 verbundene Hülse 26 mit einem exzentrischen Hülsenteil 27 auf dem eine zylindrische Stahlhülse 28 aufgepreßt ist. Diese trägt ein Kugellager 29, das sich mit der Umfangsfläche 30 an der Konsole 4 abstützt.

Die Befestigung der Hülse 26 an der Stange 21 erfolgt über eine Anschlagfeder 31, die ein vorstehendes Anschlagteil 32 benachbart des Kugellagers 39 für eine Verriegelungsstellung V und einen Anschlagschenkel 33 für eine Losstellung L benachbart eines radial in der Stange 21 angeordneten Sperrstiftes 24 aufweist. Die Feder 31 ist mit ihrem Anschlagschenkel 33 in einem Aufnahmeelement 35 der Quertraverse 8 gehalten, so daß bei einer Verdrehung der Stange 21 über die Handhabe 36 eine gewisse Rückstellkraft über diese Feder 31 erzielt wird.

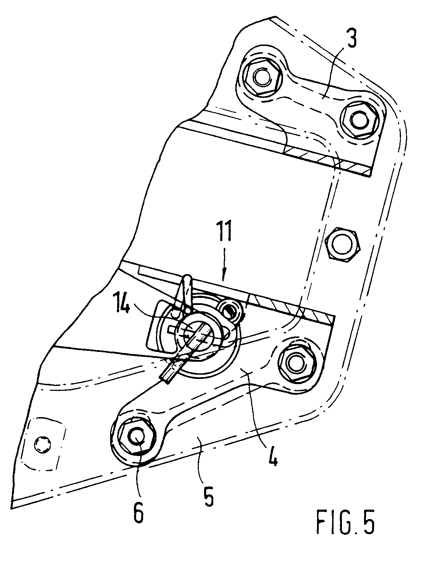

Die Stange 21 der Klemmeinrichtung 11 wird von der Verriegelungsstellung V über die Losstellung L um ca. 90° gedreht, wobei in die Verriegelungsstellung V, wie Fig. 5 zeigt, das Anschlagteil 32 sich an die Außenfläche der Konsole 4 anlegt und somit ein weiteres Verdrehen mit nachfolgendem Lösen der Klemmeinrichtung nicht mehr möglich ist. Bei einem Verdrehen der Stange 21 in Pfeilrichtung 37 schlägt in der max. Losstellung L der Sperrstift 24 am Anschlagschenkel 33 an, so daß ein weiteres Verdrehen verhindert wird.

Die Zugstange 14 weist an ihrem der Aufnahme 23 abgekehrten freien Ende die Sicherheitseinrichtung 45 auf, die mit der Einstelleinrichtung 46 eine Baueinheit bildet.

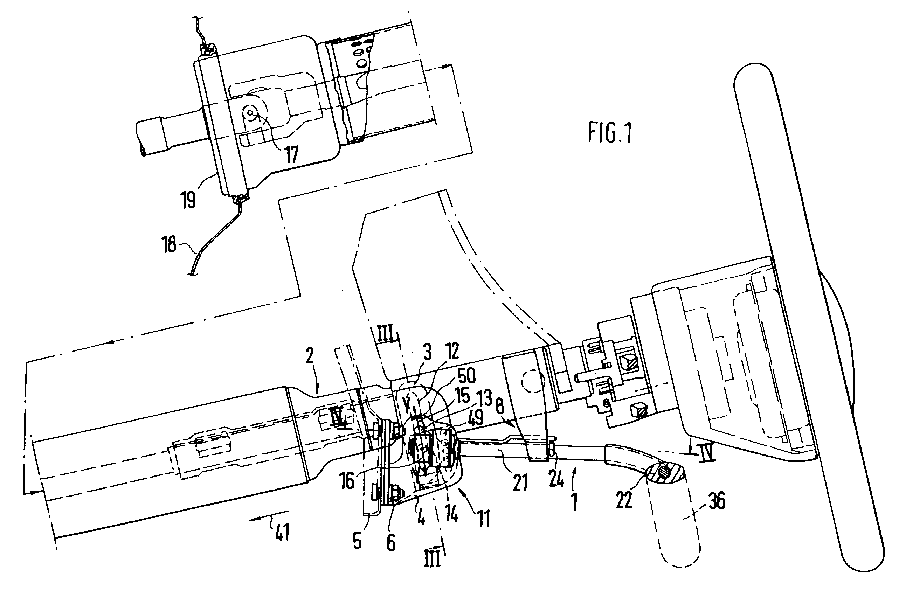

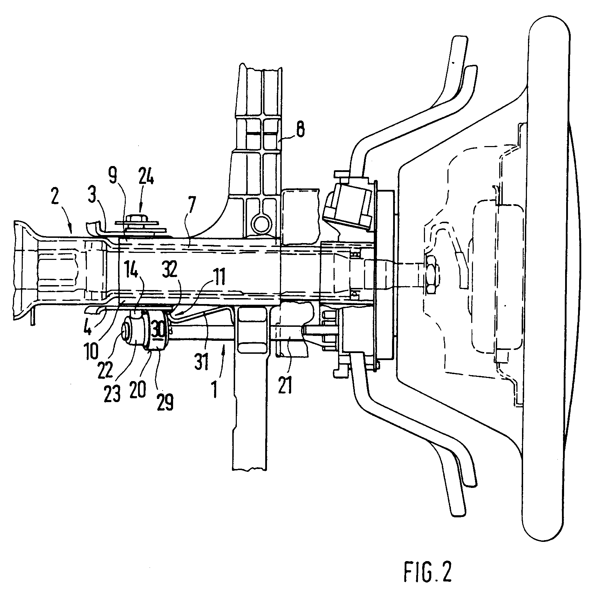

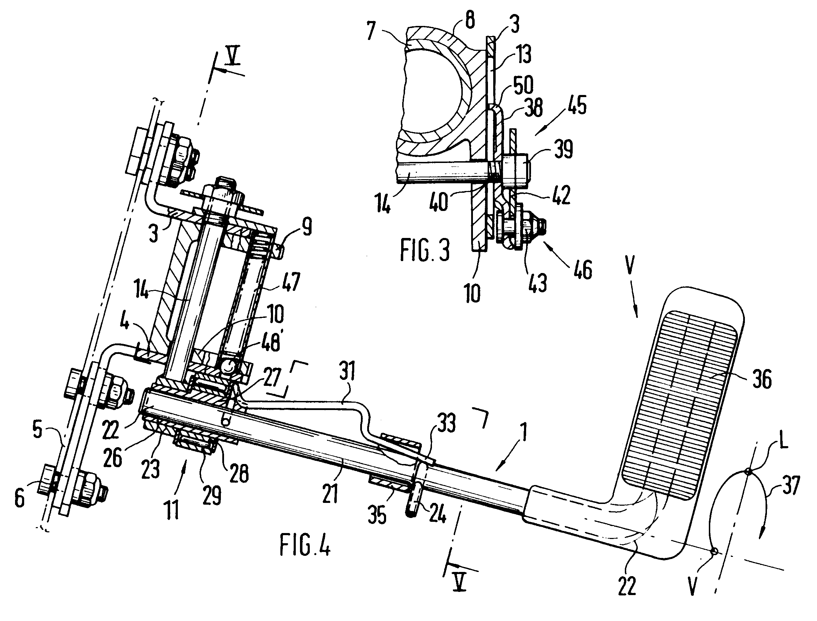

Diese Sicherheitseinrichtung 45 besteht im wesentlichen aus einer Tragplatte 38 (Fig. 3), die über eine Abstellung 50 im Schlitz 13 der Konsole 3 geführt ist. Die Stange 14 erstreckt sich durch die Trägerplatte 38 und ist über eine Mutter 39 auf einem Steilgewinde 40 der Stange 14 gehalten so daß bei einer Bewegung der Lenkanlage - welche uber die Konsolen 3,4 mit der Aufbauwand 5 verbunden sind - durch einen Crash in Pfeilrichtung 41 (Fig. 1), die Mutter 39 von der Druckstange 21 gelöst und die Klemmwirkung über das Exzenterelement 20 aufgehoben wird und die Lenksäule 2 relativ frei verschwenkbar ist. Mit der Mutter 39 ist eine Scheibe 42 verbunden, die über eine Schraube 43 gegen die Trägerplatte 38 spannbar ist, wodurch eine definierte Vorspannung der Sicherheitseinrichtung 45 erzielt wird.

Wie Fig. 4 näher zeigt, wird bei einem Verschwenken der Stange 21 über die Handhabe 36 in Pfeilrichtung 37 das Exzenterelement 20 aus seiner Verriegelungsstellung V von der Konsole 3, 4 gelöst. Der Anschlagschenkel 33 der Feder 31 schlägt in der Losstellung L am Sperrstift 24 an und begrenzt die Schwenkbewegung in Pfeilrichtung 37. Die Losstellung L ist nach einer ca. 90°-Schwenkbewegung erreicht, und das Exzenterelement 20 ist losgelöst von der Konsole 4. In dieser Stellung L weist die Handhabe 36, wie in Fig. 1 in gestrichelten Linien angedeutet, etwa senkrecht nach unten, wogegen in der Verriegelungsstellung V die Handhabe 36 in einer horizontalen Ebene liegt.

Wenn die Losstellung L erreicht ist, kann die Lenksäule 2 mit dem Querträger 8 in Pfeilrichtung 15 und 16 verschwenkt werden, wobei über einen Raststift 47, der eine federbelastete Kugel 48 an seinem Ende aufweist, die in Bohrungen 49 der Konsole 4 eingreift, eine momentane Haltung der eingestellten Schwenkposition der Lenksäule 2 ermöglicht wird. Nach Einstellung der gewünschten Position der Lenksäule 2 wird über das Exzenterelement 20 durch Drehen der Stange 21 über die Handhabe 36 entgegen der Pfeilrichtung 37 eine Verriegelung vorgenommen.

## Patentansprüche

1. Vorrichtung zum Verriegeln einer verstellbaren Sicherheitslenksäule (2) für Kraftfahrzeuge, die zwischen Konsolen (3,4) des Fahrzeugaufbaus (5) in Schlitzführungen (12,13) verschwenkbar angeordnet und über eine von einem Betätigungshebel (36) stellbare Exzenter-Klemmeinrichtung mit einer quer zur Lenksäulenachse gehaltenen und sich durch die annähernd in einer vertikalen Ebene (Y-Y) angeordneten Führungsschlitze (12, 13) der Konsolen (3, 4) erstreckenden, Zugstange (14) zum Fahrzeugaufbau (5) festsetzbar ist, **dadurch gekennzeichnet**, daß die Klemmeinrichtung (11) ein zur Lenksäule (2) achsparallel angeordnetes Exzenterelement (20) umfasst, das axial auf einer Stange (21) eines Betätigungshebels festgelegt ist, die mit ihrem freien Ende (22) in einer endseitigen Aufnahme (23) der Zugstange (14) drehbar lagert, wobei das Exzenterelement (20) auf der Stange (21) des Betätigungshebels eine Hülse (26) mit einem exzentrischen Hülsenteil (27) aufweist, das mit einer auf dem exzentrischen Hülsenteil befestigten zylindrischen Stahlhülse (28) mittels eines Kugellagers (29) drehbar ist und das sich mit seiner Umfangsfläche (30) an der Konsole (4) abstützt.

2. Vorrichtung nach Anspruch 1, **dadurch gekennzeichnet**, daß die Hülse (26) des Exzenterelements (20) über eine Anschlagleder (31) mit der Stange (21) verbunden ist, die ein vorstehendes Anschlagteil (32) für eine Verriegelungsstellung (V) benachbart des Kugellagers (29) und einen Anschlagschenkel (33) für eine Losstellung (L) im Bereich eines radial angeordneten Sperrstiftes (24) der Stange (21) aufweist.

3. Vorrichtung nach einem oder mehreren der vorhergehenden Ansprüche, **dadurch gekennzeichnet**, daß die Anschlagfeder (31) zwischen der Konsole (4) und der Stange (21) angeordnet ist und mit dem freien Ende des Anschlagschenkels (33) in einem Aufnahmeelement (35) einer Ouertraverse (8) der Lenksäule (2) gehalten wird.

4. Vorrichtung nach einem oder mehreren der vorhergehenden Ansprüche, **dadurch gekennzeichnet**, daß die Klemmvorrichtung (11) einen Drehbereich von ca. 90° von der Verriegelungsstellung (V) bis zur Losstellung (L) aufweist, wobei sich in der Verriegelungsstellung (V) das Anschlagteil (32) der Feder (31) an der Außenfläche der Konsole (4) abstützt imd in der Losstellung (L) der Anschlagschenkel (33) am Sperrstift (34) anliegt.

5. Vorrichtung nach einem oder mehreren der vorhergehenden Ansprüche, **dadurch gekennzeichnet**, daß das der Aufnahme (23) der Druckstange (14) abgekehrte freie Ende eine Sicherheitseinrichtung (45) aufweist, die aus einer im Führungsschlitz (13) der Konsole (3) geführten Trägerplatte (38) besteht, das eine mit dieser Einrichtung (45) verbundene Einstelleinrichtung (46) umfasst.

6. Vorrichtung nach Anspruch 5, **dadurch gekennzeichnet**, daß die Druckstange (14) über eine auf einem Steilgewinde (40) befestigte Mutter (39) mit der Konsole (3) verbunden ist, die eine übergreifende Scheibe (42) trägt, welche zur Trägerplatte (38) über eine Einstellschraube (43) verbunden ist.

7. Vorrichtung nach einem oder mehreren der vorhergehenden Ansprüche, **dadurch gekennzeichnet**, daß zwischen den beiden Konsolen (3 und 4) eine die Verschwenkstellungen der Lenksäule (2) federnd haltender Raststift (47) angeordnet ist, der mit seinem einen Ende fest in einem Schenkel (9) der Quertraverse (8) angeordnet ist und mit seinem anderen, ein federndes Kugelelement audfweisenden und in der Quertraverse (8) gelagerten Ende in Bohrungen (49) der Konsole (4) eingreifend ist.

## Claims

1. A device for locking an adjustable safety steering column (2) for motor vehicles, which is arranged so as to be pivotable in slotted guides (12, 13) between brackets (3, 4) of the vehicle body (5) and can be set with respect to the vehicle body (5) by a connecting rod (14) - held transversely to the longitudinal axis of the steering column and extending through the guide slots (12, 13) of the brackets (3, 4) arranged substantially in a vertical plane (**Y-Y**) - by way of an eccentric clamping device settable by an actuating lever (36), **characterized in that** the clamping device (11) comprises an eccentric member (20) arranged axially parallel with the steering column (2) and secured axially on a rod (21) of an actuating lever, the free end (22) of the rod (21) being rotatably mounted in a receiving means (23) at the end of the connecting rod (14), wherein the eccentric member (20) on the rod (21) of the actuating lever has a sleeve (26) with an eccentric sleeve part (27) which together with a cylindrical steel sleeve (28) secured to the eccentric sleeve part is rotatable by means of a ball bearing (29) and which is supported with the peripheral face (30) thereof against the bracket (4).

2. A device according to Claim 1, **characterized in that** the sleeve (26) of the eccentric member (20) is connected by way of a stop spring (31) to the rod (21) comprising a projecting stop part (32) for a locking position (**V**) adjacent to the ball bearing (29) and a stop arm (33) for a released position (**L**) in the region of a radially orientated locking pin (24) of the rod (21).

3. A device according to one or more of the preceding Claims, **characterized in that** the stop spring (31) is arranged between the bracket (4) and the rod (21) and is held with the free end of the stop arm (33) in a receiving member (35) in a transverse member (8) of the steering column (2).

4. A device according to one or more of the preceding Claims, **characterized in that** the clamping device (11) has a range of rotation of about 90° from the locking position (**V**) as far as the released position (**L**), wherein the stop part (32) of the spring (31) is supported on the outer face of the bracket (4) in the locking position (**V**) and rests on the locking pin (34) in the released position (**L**) of the stop arm (33).

5. A device according to one or more of the preceding Claims, **characterized in that** the free end remote from the receiving means (23) of the connecting rod (14) has a safety device (45) comprising a support plate (38) which is guided in the guide slot (13) in the bracket (3) and comprises a setting device (46) connected to the said device (45).

6. A device according to Claim 5, **characterized in that** the connecting rod (14) is connected to the bracket (3) by way of a nut (39) secured to a coarse thread (40), the bracket (3) supporting an overlapping disc (42) which is connected to the support plate (38) by way of a setting screw (43).

7. A device according to one or more of the preceding Claims, **characterized in that** an engaging pin (47) locking the pivot positions of the steering column (2) in a resilient manner is arranged between the two brackets (3 and 4), the engaging pin (47) being securely arranged at one end thereof in an arm (9) of the transverse member (8) and engaging in bores (49) in the bracket (4) with the other end thereof which comprises a resilient ball member and is mounted in the transverse member (8).

## Revendications

1. Dispositif de verrouillage d'une colonne de direction de sécurité (2) réglable pour véhicules automobiles, qui est montée pivotante entre des consoles (3, 4) de la carrosserie (5) du véhicule dans des organes de guidage à fente (12, 13) et qui, par l'intermédiaire d'un dispositif de serrage à excentrique, réglable au moyen d'un levier d'actionnement (36), peut être bloquée par rapport à la carrosserie (5) du véhicule avec une barre de traction (14) fixée transversalement à l'axe de la colonne de direction et traversant les fentes de guidage (12, 13) des consoles (3, 4), situées à peu près dans un plan vertical (Y-Y), caractérisé en ce que le dispositif de serrage (11) comporte un élément à excentrique (20), parallèle à l'axe de la colonne de direction (2), qui est fixé axialement sur une tige (21) d'un levier d'actionnement, laquelle tige est montée tournante avec son extrémité libre (22) dans un logement (23) terminal de la barre de traction (14), l'élément à excentrique (20) comportant sur la tige (21) du levier d'actionnement un manchon (26) avec une partie de manchon (27) excentrique, qui peut tourner au moyen d'un roulement à billes (29), avec un manchon d'acier (28) cylindrique fixé sur la partie de manchon excentrique et qui prend appui avec sa surface périphérique (30) sur la console (4).

2. Dispositif selon la revendication 1, caractérisé en ce que le manchon (26) de l'élément à excentrique (20) est relié, par un ressort de butée (31), avec la tige (21) qui présente une partie de butée saillante (32) pour une position de verrouillage (V), à proximité du roulement à billes (29) et une branche de butée (33) pour une position de déverrouillage (L) dans la zone d'une goupille d'arrêt (24) placée radialement, de la tige (21).

3. Dispositif selon une ou plusieurs des revendications précédentes, caractérisé en ce que le ressort de butée (31) est placé entre la console (4) et la tige (21) et est maintenu avec l'extrémité libre de la branche de butée (33) dans un élément formant logement (35) d'une traverse (8) de la colonne de direction (2).

4. Dispositif selon une ou plusieurs des revendications précédentes, caractérisé en ce que le dispositif de serrage (11) présente une zone de rotation d'environ 90° depuis la position de verrouillage (V) jusqu'à la position de déverrouillage (L), dans la position de verrouillage (V) la partie de butée (32) du ressort (31) s'appuyant contre la surface extérieure de la console (4) et dans la position de déverrouillage (L), la branche de butée (33) s'appliquant contre la goupille d'arrêt (34).

5. Dispositif selon une ou plusieurs des revendications précédentes, caractérisé en ce que l'extrémité libre, tournée à l'opposé du logement (23) de la barre de pression (14) présente un dispositif de sécurité (45) qui est constitué d'une plaque de support (38) guidée dans la fente de guidage (13) de la console (3), qui comporte un dispositif de réglage (46) relié à ce dispositif (45).

6. Dispositif selon la revendication 5, caractérisé en ce que la tige de pression (14) est reliée par un écrou (39) fixé sur un filetage à pas rapide (40), avec la console (3) qui porte un disque (42) passant dessus, lequel est assemblé avec la plaque de support (38) par une vis de réglage (43).

7. Dispositif selon une ou plusieurs des revendications précédentes, caractérisé en ce qu'entre les deux consoles (3 et 4) il est prévu une tige d'encliquetage (47) maintenant de manière élastique les positions de pivotement de la colonne de direction (2), laquelle tige d'encliquetage est placée avec l'une de ses extrémités de manière fixe dans une branche (9) de la traverse (8) et avec son autre extrémité, comportant un élément à billes, formant ressort et montée dans la traverse (8), s'engage dans des trous (49) de la console (4).
